# EUROPEAN PATENT APPLICATION

(11) **EP 1 106 240 A2**
(43) Date of publication of application: **13.06.2001**
(21) Application number: 00204251.3
(22) Date of filing: 30.11.2000
(51) Int. Cl.: B01D 53/92, B01D 53/14, B01D 53/04, F01N 3/08, F01N 3/04

(54) **Process and apparatus for purifying exhaust gases emanating from motor vehicles**

(30) Priority: 10.12.1999 IT CR990013
(71) Applicant: Vacchi, Ariberto, 26013 Crema (CR) (IT)
(72) Inventor: Vacchi, Ariberto, 26013 Crema (CR) (IT)
(74) Representative: Mascioli, Alessandro

(57) **Abstract**

Process for inhibiting the toxic elements of exhaust gases from the combustion of fuel for motor vehicles, comprisising the following phases:splitting up the exhaust gases flow into a plurality of parallel flows; gurgling of the flows into a distraining liquid; passage of the gurgled gases through an active carbon filter; washing the filtered gases countercurrent with the same atomized distraining liquid.

Equipment comprising a sealed container (1) with an inlet (2) and an outlet (3) for the exhaust gases, further comprising: means (4) for splitting out the exhaust gas flow into a plurality of flows; a first chamber (5) containing distraining liquid (6), in which said flows gurgle; an active carbon filter (7); a second chamber (8) containing distraining liquid and in connection with said first chamber, comprising means (9) for atomizing said distraining liquid and for performing the counterwashing of said exhaust gases.

## Description

The present invention concerns a process for inhibiting the toxic elements of exhaust gases from the combustion of fuel for motor vehicles, and the respective equipment.

At present, mainly catalytic silencers are used for reducing the emission of toxic elements of the exhaust gases of motor vehicles.

However, their maximum effectiveness is limited to about 10,000 to 20,000 km of running, after which a lowering of effectiveness occurs and the silencers should be submitted to servicing, which only rarely is performed.

A further inconvenient consists in that said catalytic silencers become effective only after some warming up, and therefore are ineffective for only short ways.

Another inconvenient consists in that exhaust catalytic silencers become a toxic and dangerous waste, difficult to be made inactive.

Very often they are melted in blast furnaces which emit highly polluting gases and produce highly dangerous slag.

It is the aim of the present invention to realize a process for obtaining a considerable reduction of the emission into the atmosphere of toxic polluting elements like hydrocarbons, carbon monoxide and dioxide and particle substances products from the combustion of fuels for motor vehicles, especially petrol and gas-oil, as well as a respective effective equipment, the effectiveness whereof may be easily checked and which may easily undergo maintenance, which produces treatable slag and which won't become itself a special waste when it is no more used.

The aims set forth are reached by means of the process according to the present invention, for inhibiting the toxic elements of exhaust gases from the combustion of fuels for motor vehicles, characterized in that it comprises the following phases:
1. splitting up the exhaust gases flow into a plurality of parallel flows, each of smaller capacity;
2. leading the single gas flows through a scrubber into a distraining liquid;
3. the passage of the gurgled gases through an active carbon filter;
4. washing the filtered gases countercurrent with the same atomized distraining liquid.

The distraining liquid consists of a solution of distillate water and surface-active agent.

For improving the treatment effectiveness also with cold engine, for increasing the effectiveness and the life of the distraining liquid and favour the streaming out of the treated gases, the latter are mixed with dry air gurgled into the same distraining liquid before the discharge into the atmosphere.

The equipment realizing above mentioned process, comprising a sealed container provided with an inlet and an outlet for the exhaust gases, is characterized in that t comprises, in a sequence:
- means for splitting out the flow of the inlet exhaust gases into a plurality of gas flows of smaller capacity;
- a first chamber containing a distraining liquid inside which said flows gurgle;
- an active carbon filter;
- a second chamber containing distraining liquid, in connection with the first chamber, comprising means for atomizing said distraining liquid and for counterwashing the exhaust gases.

The advantages obtained by means of the present invention mainly consist in that the treatment process may be easily controlled and checked; all elements forming the respective equipment may be easily regenerated or replaced; the equipment may be installed onto all kinds of motor vehicles fed by petrol or gas-oil and also works as a silencer; the efficiency of the engine does not suffer from the presence of the equipment applied to the exhaust gas pipe, and the equipment is active from the moment of ignition of the engine and does not need a particular warming .

Further features and advantages of the present invention will be more evident from the enclosed drawings in which an embodiment is shown.

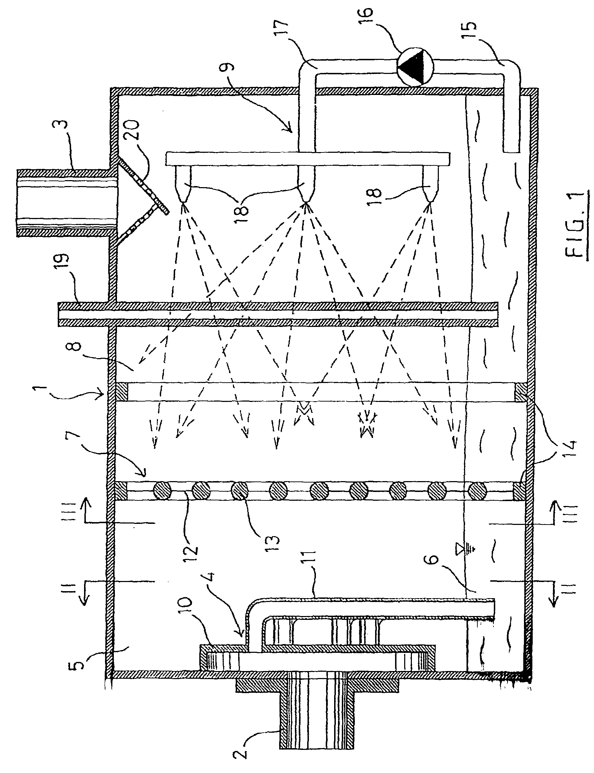

Figure 1 shows a longitudinal section of an equipment for inhibiting the toxic elements of exhaust gases from he combustion of fuels for motor vehicles, according to the present invention.

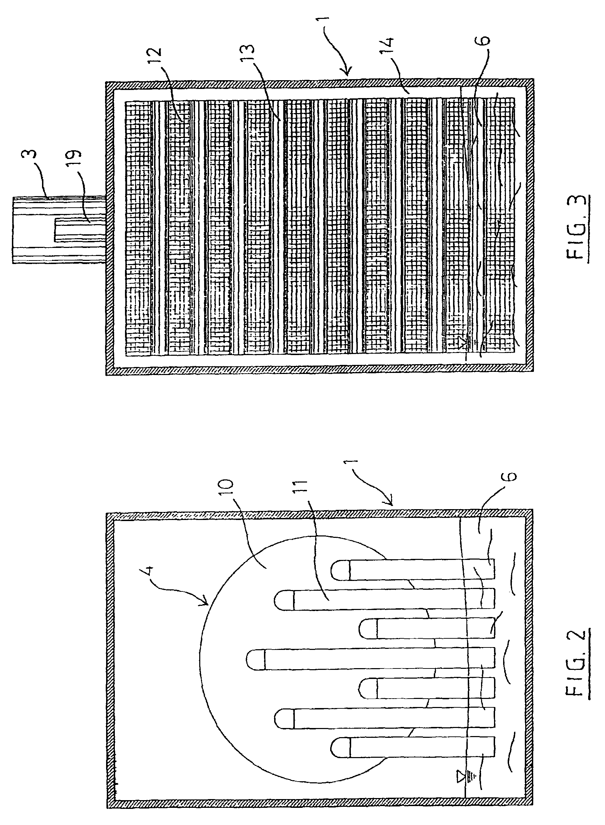

Figures 2 and 3 show a square section of the equipment according to figure 1, along lines II-II and III-III.

The working of the equipment according to the present invention may be described as follows:
the exhaust gases from the combustion of petrol or gas-oil are splitted out into a plurality of flows of smaller capacity and are gurgled in a distaining liquid.

The gases obtained from said liquid pass through an active carbon filter, beyond which they are hit by an atomized jet of said distraining liquid and are now discharged into the atmosphere.

The splitting out of the flow into a plurality of flows of smaller capacity allows to obtain smaller bubbles and a more effective exchange between the gas and the distraining liquid.
Advantageously, the distraining liquid consists of a solution of distilled water and surface-active agent, in trade called "Tepol" and produced by "Shell".

Relating now to the details shown in the figures, the equipment performing the process according to the present invention mainly comprises:
- a sealed container 1 with an inlet 2 and an outlet 3 for the exhaust gases;
- means 4 for splitting out the exhaust gas flow into a plurality of flows of smaller capacity;
- a first chamber 5 containing distraining liquid 6;
- an active carbon filter 7;
- a second chamber 8 also containing the same distraining liquid 6;
- means 9 for atomizing said distraining liquid.

The container 1 is advantageously permeable to water and to gas and contains the solution of distraining liquid in a suitable concentration. The distraining liquid takes about the third part of the volume of said container.

The inlet 2 is provided with a junction of known kind and of suitable diameter for being applied to the exhaust pipe of the engine, while the outlet 3 may be connected to the terminal part of the pipe discharging the exhaust gases into the atmosphere.

The means 4 comprise a perforated diaphragm 10 for splitting out the gas flow into a plurality of parallel flows, as well as a plurality of deviating pipes 11 for leading said flows below the level of the distraining liquid.

The first chamber 5 is connected to said inlet 2 and is separated from the second chamber 8 by an active carbon filter 7.

Said filter comprises at least one wall permeable to gas as well as to the distraining liquid, advantageously consisting of a hempen cloth 12 comprising a series of horizontal housings wherein small pieces active carbon are placed: small pieces make the filter last longer.

A fixing frame 14 of mainly known kind supports said filter.

Downstream of said first wall further frame fixing devices 14 are provided, for any further active carbon filtering wall.

The second chamber 8 is connected to the outlet 3 and is provided with atomizing means 9 mainly comprising a pipe 15 for the intake of said distraining liquid, means for pumping 16, a sending pipe 17 and at least one atomizing nozzle 18.

A pipe 19 is also connected to said second chamber 8, for feeding dry air from a compression system not shown in the figures.

Said pipe 19 advantageously comes out below the level of the distraining liquid: thus the blown air modifies the COD of said distraining liquid.

For avoiding that possible foam produced by said distraining liquid due to gurgling of the air may come out of said outlet 3, the latter is protected by a foam-keeping device 20 mainly comprising perforated parts.

The equipment according to the present invention further consists of devices of known kind for regulation and control, not shown in the figures, like e.g.:
- means for adjusting the opening of the diaphragm inside said means 4, which modify the openings for the passage of the exhaust gases according to the capacity of the discharge;
- means for adjusting the capacity of said means 9 for atomizing said distraining liquid;
- means for adjusting the capacity of the air from said pipe 19 connected to a compression system;
- sensor means for the distraining liquid;
- sensor means for the percentage of oxygen in said distraining liquid;
- bottom cap, with discharging tap;
- an anti-siphon no return valve, placed onto the pipe upstream said means 4 or at least on one deviating pipe 11;
- an anti-tossing device for said liquid similar to the one used in the fuel tanks.

According to the present invention, the working of the process and of the respective equipment may be described as follows:
the exhaust gases from the engine are fed to the diaphragm 10 connected to said inlet 2 and through said deviating pipes 11 they are led below said distraining liquid 6 in which they gurgle when they come back to the surface.

Now the emerging gases are forced to pass through an active carbon filter 7 which is kept constantly moist due to the liquid going up through the hempen cloth 12.

Besides said filter 7, the gases are hit by a flow of distraining liquid atomized by said means 9 and come out from said outlet 3, in case getting mixed up with dry air getting in through pipe 19.

The use of the equipment according to the present invention determines the crumbling of the active carbon, which consumes and gets deposited into the distraining liquid. When the active carbon is all consumed, it is replaced or the whole filter 7 is replaced.

When also said distraining liquid is consumed, it is taken off from the equipment and undergoes regeneration by means of an industrial distillation.

Said process allows to take off the water from the solution and to make a deposit of the surface-active agent with the carbon slag, the particle substances and the hydrocarbons eliminated from the exhaust gases.

The distiller may completely dry the residual product so as to use it as dust component in concrete or bitumen or compressed in bars and used as charcoal crayon for drawing.

A test has been performed with an equipment having the following dimensions: 40 cm length, 30 cm height and 20 cm depth, containing 12 litres of 0.12% volume distraining liquid. Applied to a motor vehicle fed with common petrol with a 1,600 cc engine, said test has supplied the following results, whereby A) shows the test performed *without* the equipment applied to the exhaust pipe and B) shows the results of the test *with* the equipment:
1. With clean distraining liquid

| A | B |
|---|---|
| CO (%) 06.74 | CO (%) 01.23 |
| CO2 (%) 07.50 | CO2 (%) 01.30 |
| HC (ppm) 0323 | HC (ppm) 0063 |
| O2 (%) 05.50 | O2 (%) 18.20 |

2. With used liquid, after about 6,000 km running

| A | B |
|---|---|
| CO (%) 02.88 | CO (%) 00.89 |
| CO2 (%) 17.20 | CO2 (%) 05.50 |
| HC (ppm) 0134 | HC (ppm) 0049 |
| O2 (%) 01.50 | O2 (%) 12.70 |

These results show a very good effectiveness of reduction of the emissions of carbon oxides and hydrocarbons, with a contemporary increase of oxygen in the exhaust gases. Similar tests performed with the same equipment and clean distraining liquid on gas-oil fed engines, have shown the following results, measured with type-tested opacimeter, confirming the effectiveness of the device according to the present invention:
1^{st} test

| A) passing heavy parts | B) passing heavy parts |
|---|---|
| 44% | 24% |
| 1,44 K | 0,68 K |

2^{nd} test:

| A) passing heavy parts | B) passing heavy parts |
|---|---|
| 54% | 18% |
| 1,94 K | 0,49 K |

## Claims

1. A process for inhibiting the toxic elements of exhaust gases from the combustion of fuel for motor vehicles, ***characterized in that*** it comprises the following phases:
- splitting up the exhaust gases flow into a plurality of parallel flows, each of smaller capacity;
- leading the single gas flows through a scrubber into a distraining liquid;
- the passage of the gurgled gases through an active carbon filter;
- washing the filtered gases countercurrent with the same atomized distraining liquid.

2. A process according to claim 1, ***characterized in that*** said distraining liquid consists of a solution of distilled water and surface-active agent.

3. A process according to claim 1, ***characterized in that*** the process comprises a phase of mixing the gases washed in countercurrent with dry air gurgled in the same distraining liquid.

4. An equipment for inhibiting the toxic elements of exhaust gases from the combustion of fuel for motor vehicles, comprising a sealed container (1) with an inlet (2) and an outlet (3) for the exhaust gases, ***characterized in that*** it comprises, in sequence:
- means (4) for splitting out the exhaust gas flow into a plurality of flows of smaller capacity;
- a first chamber (5) containing distraining liquid (6), in which said flows gurgle;
- an active carbon filter (7);
- a second chamber (8) containing distraining liquid (6) in connection with said first chamber, comprising means (9) for atomizing said distraining liquid and for performing the counterwashing of said exhaust gases.

5. An equipment according to claim 4, ***characterized in that*** said means (4) comprise a perforated diaphragm (10) for splitting out the exhaust gases flow into a plurality of flows, and deviating pipes (11) for leading said flows below the level of he distraining liquid.

6. An equipment according to claim 4, ***characterized in that*** said distraining liquid is a solution of distilled water and "Tepol".

7. An equipment according to claim 4, ***characterized in that*** said filter comprises at least one wall (12) permeable to gases and liquid, and that allows the capillary getting up of said distraining liquid and comprising at least one housing containing active carbon.

8. An equipment according to claim 4, ***characterized in that*** said atomizing means (9) comprise an intake pipe (15) for said distraining liquid, means for pumping (16), a sending pipe (17) and at least one atomizing nozzle (18).

9. An equipment according to claim 4, ***characterized in that*** a pipe (19) for feeding a dry air flow below the level of said distraining liquid, is connected to said second chamber (8).

10. A motor vehicle ***characterized in that*** it comprises an equipment according to claims 4 to 9.
